# EUROPEAN PATENT APPLICATION

(11) **EP 4 707 973 A1**
(43) Date of publication of application: **11.03.2026**
(21) Application number: 25200625.9
(22) Date of filing: 05.09.2025
(51) Int. Cl.: G05B 19/418

(54) **SYSTEM AND METHOD FOR REDUCING WASTE GENERATED DURING FABRICATION OF ENGINE COMPONENTS**

(30) Priority: 05.09.2024 US 202418826067
(71) Applicant: PRATT & WHITNEY CANADA CORP., Longueuil, Québec J4G 1A1 (CA)
(72) Inventor: GOVER, Christopher, (01BE5) Longueuil, J4G 1A1 (CA)
(74) Representative: Dehns

(57) **Abstract**

A method of fabricating parts is provided. The method comprises identifying a location of a defect (510) in a piece of solid base material (500), generating a cut path (520) through the piece of solid base material (500) as a function of the location of the defect (510), and fabricating the parts from the piece of solid base material (500) by executing the cut path (520), the executing including cutting the piece of solid base material (500) along the cut path such that all the parts, once cut out of the piece of solid base material (500), exclude the defect (510).

## Description

### FIELD

The subject matter disclosed herein relates to a system and method for fabricating parts and, in particular, to a system and method for reducing waste generated during fabrication of engine components.

### BACKGROUND

Ceramic matrix composites (CMCs) have physical properties that can enable significant performance improvements to gas turbine engines. However, due to the prohibitive costs associated with CMCs, the materials have not yet been widely adopted. Developing more cost-effective methods of manufacturing aircraft components while meeting all structural requirements using CMCs is therefore highly desirable and would help move the aerospace industry toward lower emissions.

For example, one prior art method of manufacturing using CMCs in aerospace involves placing the material in a mold which is close to the final part geometry. However, defects are sometimes present in the material. These are caught by inspection methods performed on the parts made using the mold, and this results in a percentage of the parts needing to be scrapped. This, in turn, decreases accepted-part production rates, creates wasted CMCs, and increases the corresponding piece price of accepted parts.

Therefore, while existing systems and methods for fabricating parts may be suitable for their intended purposes, improvements are highly desirable.

### SUMMARY

The present invention is directed, in a first aspect, to a method of fabricating parts, comprising: identifying a location of a defect in a piece of solid base material; generating a cut path through the piece of solid base material as a function of the location of the defect, the cut path, when executed, creating the parts from the piece of solid base material (i.e., the cut path is configured to create the parts from the piece of solid base material when executed (e.g., when cutting the piece of solid base material along the cut path)), the function including locating (i.e., the function is configured to locate) the cut path through the piece of solid base material such that all the parts, once cut out of the piece of solid base material, exclude the defect; and fabricating the parts from the piece of solid base material by executing the cut path, the executing including cutting the piece of solid base material along the cut path.

In another aspect, the present invention is directed to a system for fabricating parts, comprising: a material-inspection module operable or configured to identify locations of defects in a piece of solid base material; a fabrication module operable or configured to execute a cut path through the piece of solid base material to fabricate the parts; and a cut path generation module operable or configured to receive the locations of the defects from the material-inspection module and to generate the cut path through the piece of solid base material based on the locations of the defects such that, the cut path, when executed by the fabrication module, excludes each defect of the defects from each part of the parts.

In any of the aspects or embodiments described above or herein, the parts may include one or more aircraft parts (e.g., gas turbine engine components). The method of fabricating parts may comprise fabricating or cutting one or more aircraft parts from a piece of solid base material (e.g., a ceramic matrix composite (CMC) material).

In any of the aspects or embodiments described above or herein, identifying the location of the defect may include one or more of: generating an x-ray image of the piece of solid base material; performing a visual inspection of the piece of solid base material; performing an ultrasound inspection of the piece of solid base material; and performing a fluorescent penetrant inspection of the piece of solid base material.

In any of the aspects or embodiments described above or herein, the function may include locating (i.e., the function may be configured to locate) the cut path through the piece of solid base material to maximize an amount of the piece of solid base material utilized during the fabrication of the parts.

In any of the aspects or embodiments described above or herein, the method may further include: programming the cut path into a controller of a machine operable or configured to cut the parts out of the piece of solid base material; and the executing the cut path is performed by the machine being controlled by the controller.

In any of the aspects or embodiments described above or herein, the defect may comprise a plurality of defects.

In any of the aspects or embodiments described above or herein, generating the cut path may define or may be executed to define a near-net shape of at least one part of the parts.

In any of the aspects or embodiments described above or herein, the method may further comprise performing a dimensional inspection of the parts after the executing the cut path.

In any of the aspects or embodiments described above or herein, the method may exclude performing post-processing of the parts after the executing the cut path.

In any of the aspects or embodiments described above or herein, the piece of solid base material may comprise or consist of a ceramic matrix composite.

In any of the aspects or embodiments described above or herein, the parts may include one or more of: an apex seal, a side plate, a feather seal, a platform gap seal, a sealing ring, a piston ring, a shroud segment, and a combustion liner.

In any of the aspects or embodiments described above or herein, generating the cut path may include defining the cut path as a function of: geometry and orientation of the defect relative to the piece of solid base material, a location, orientation, and geometry of the piece of solid base material, and geometry of the parts.

In any of the aspects or embodiments described above or herein, the cut path generation module may be operable or configured to generate the cut path through the piece of solid base material to maximize the number of the parts that can be made from the piece of solid base material.

In any of the aspects or embodiments described above or herein, the fabrication module may be operable or configured to cut a ceramic matrix composite (CMC) material (e.g., to fabricate the parts).

In any of the aspects or embodiments described above or herein, the cut path generation module may include a processor in communication with a non-transitory memory storing instructions that, when executed by the processor, may cause the processor to: receive data indicative of geometry and orientation of the defects relative to the piece of solid base material, a location and orientation of the piece of solid base material relative to the fabrication module, and geometry of the parts; and generate the cut path based on the geometry and orientation of the defects, the location and orientation of the piece of solid base material, and the geometry of the parts.

The present invention may include any one or more of the individual features disclosed above and/or below alone or in any combination thereof.

### BRIEF DESCRIPTION OF FIGURES

The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is an illustration of a control module and a material inspection module for an exemplary system for reducing waste generated during fabrication of engine components.
FIG. 2 is an illustration of the exemplary system for reducing waste generated during fabrication of engine components of FIG. 1.
FIG. 3 is an illustration of a flowchart illustrating an exemplary method for reducing waste generated during fabrication of engine components.
FIG. 4 is an illustration of a piece of solid base material having a pattern of parts formed and an area containing a defect.
FIG. 5 is an illustration of another piece of solid base material having a pattern of parts formed and an area containing a defect.

### DETAILED DESCRIPTION

The embodiments of the present disclosure can comprise the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure teaches systems and methods for fabrication of parts, such as gas turbine engine components. The developers have found that among other materials that the systems and methods could be applied to, applying the systems and methods to various base materials may yield unexpectedly good results, including significant efficiency gains, turnaround time improvements, and cost reductions. The methods described herein may both reduce defects in the resultant final parts produced and lower the overall cost of manufacturing the parts. Representative parts may include, but are not limited to, an apex seal, a side plate, a feather seal, a platform gap seal, a sealing ring, a piston ring, a shroud segment, a combustion liner, and combinations thereof.

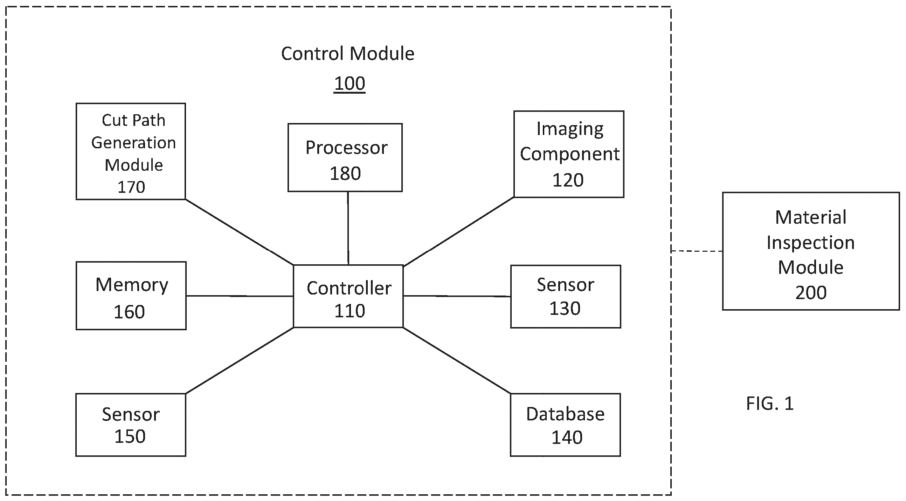

Referring now to FIGS. 1-3, a control module 100 may comprise a controller 110, an imaging component 120, a sensor 130, a database 140, a sensor 150, a memory 160, an optional cut path generation module 170, and a processor 180.

In at least one embodiment, the controller 110 may comprise a processor. In at least one embodiment, controller 110 may be implemented as a single controller or as multiple controllers (e.g., a main processor and local processors for various components), or in any other manner so long as the functionality described herein is provided. The controller 110 can include a processor, a digital signal processor (DSP), an application specific integrated circuit (ASIC), a field programmable gate array (FPGA) or other programmable logic device, discrete gate or transistor logic, discrete hardware components, or any combination thereof. The controller 110 may comprise a processor configured to execute various logical operations in response to execution of instructions, for example, instructions stored on a non-transitory, tangible, computer-readable medium configured to communicate with or being onboard the controller 110.

During imaging of the base material, the controller 110 receives sensor data from a sensor(s) 130, 150. The controller 110 can utilize the sensor data received from the sensor(s) 130, 150 to correlate a position of the base material being imaged with a location of an imaging component 120 as described further herein. In this regard, the controller 110 may control the imaging component 120 to scan the base material.

In at least one embodiment, the imaging component 120 measures discrete points of the surfaces of the base material being imaged and transmits the discrete points to the controller 110. The controller 110 is configured to determine a location of each point imaged via the imaging component 120.

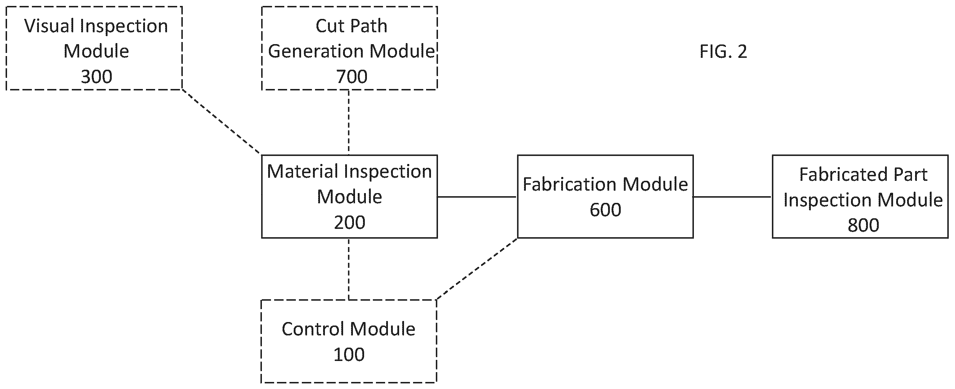

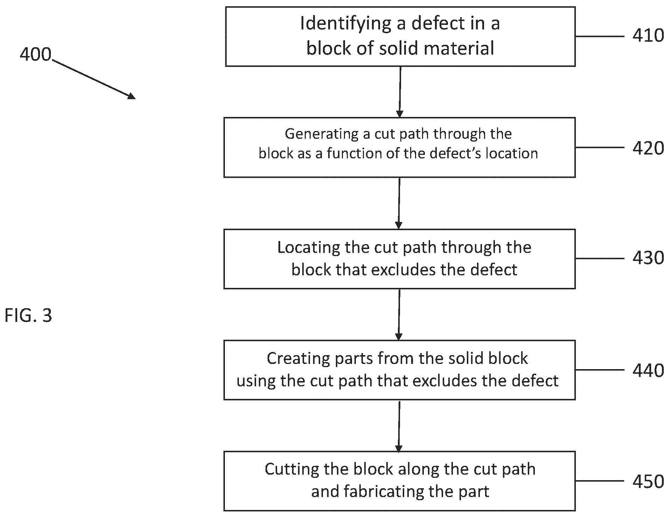

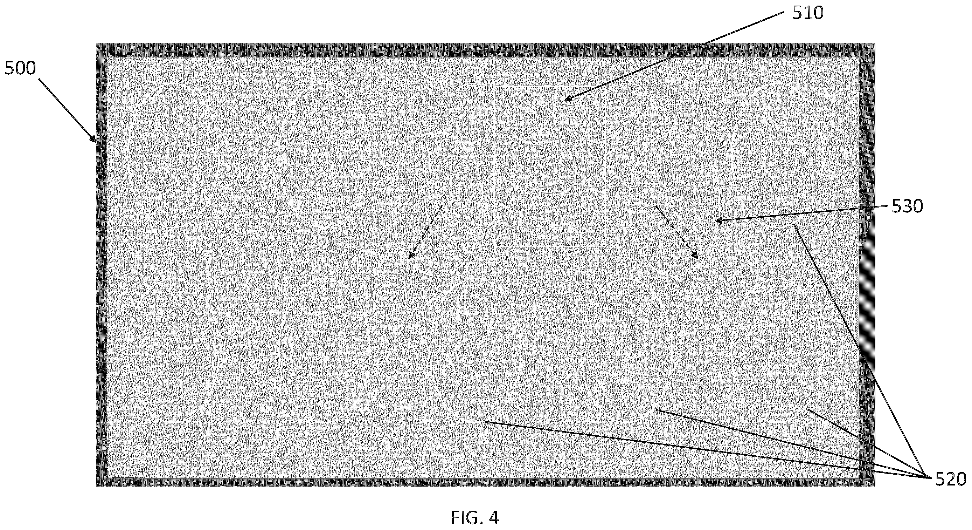

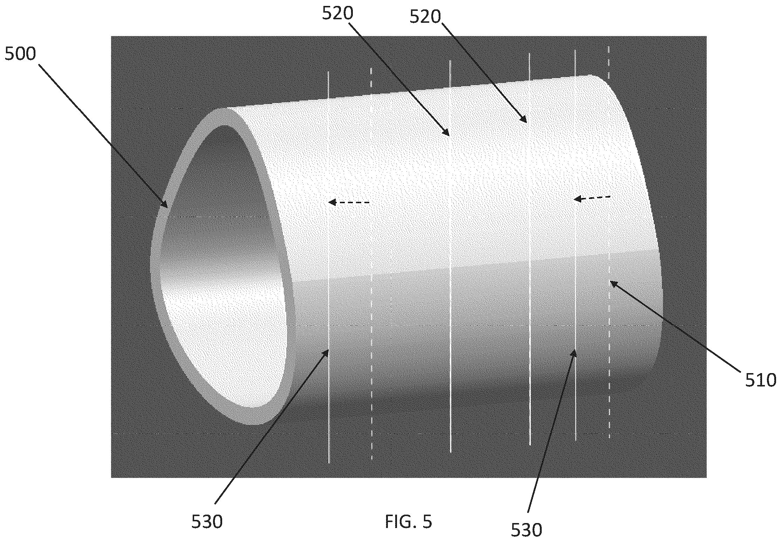

At an exemplary step 410 of an exemplary flowchart of 400 of FIG. 3, the material inspection module 200 of FIG. 2 may identify the locations of a plurality of defects in a piece of solid base material 500, from which parts are to be cut (See FIGS. 4 and 5), using the images generated by the imaging component 120 of FIG. 1. Identification by the imaging component 120 may be performed by using one or more techniques, such as, but not limited to, generating an x-ray image of the piece of solid base material; performing an ultrasound inspection of the piece of solid base material; and, performing a fluorescent penetrant inspection of the piece of solid base material. In at least one alternative embodiment, a visual inspection module 300 of FIG. 2 may identify the location of the defect 510 in the piece of solid base material of FIGS. 4 and 5 at the exemplary step 410 of the exemplary flowchart of 400 of FIG. 2. Identification by the visual inspection module 300 may be performed by an operator visually inspecting the piece of solid base material 500.

The exemplary process 400 further comprises storing, via the controller 110, the images in the database 140 and/or the memory 160. Although described herein as intermittently storing imaged portions of the piece of solid base material, the present disclosure is not limited in this regard. For example, the imaging component 120 may image the entire solid base material prior to transmitting the image to the controller 110 and still be within the scope of this disclosure. In this regard, the controller 110 may be configured to determine an amount of the piece of solid base material that has been imaged based on the position of the piece of solid base material and the position of the imaging component 120.

For example, the database 140 and/or memory 160 of the control module 100 may have various inspected bladed rotor point clouds stored therein. In various embodiments, the various inspected bladed rotors with point clouds in the database 140 and/or memory 160 may include designations (i.e., approved without repairs or the like). In this regard, any data detected may be transmitted to the controller 110 and stored in the database 140 and/or memory 160 along with any image(s) described previously herein.

In at least one embodiment, the sensor(s) 130, 150 may include sensor(s) configured to detect a position of the base material during an imaging step. In this regard, during imaging of the base material, the controller 110 receives sensor data from the sensor(s) 130, 150. The controller 110 can utilize the sensor data received from the sensor(s) 130, 150 to correlate a position of the base material being imaged with a location of the imaging component 120 as described further herein. Thus, coordinates may be determined via sensor(s) 130, 150 in a similar manner to image the base material as described further herein.

In various embodiments, the sensor(s) 130, 150 are configured to detect a position of the imaging component 120. In this regard, sensor(s) 130, 150 may be any suitable position sensors selected by a person of ordinary skill in the art, using common general knowledge, to perform the functions described herein. The controller 110 is operable determine a location of the imaging component 120 and a position of the base material. Thus, based on the location of the imaging component 120, and a location of the base material and imaging data received from the imaging component 120, a digital map (e.g., a robust point cloud) may be generated for the base material. In various embodiments, the point cloud encompasses the entire base material, e.g., between 95% and 100% of a surface area of the base material, or between 99% and 100% of the surface area of the base material.

In at least one embodiment, the solid base material 500 of FIGS. 4 and 5 is a ceramic matrix composite (CMC). In other cases, the material 500 may be a metal, a metal alloy, a metalloid, a metalloid alloy, a polymer, combinations comprising at least one of the foregoing, and the like.

In at least one embodiment, at an exemplary step 420 of flowchart 400 of FIG. 3, the cut path 520 may be generated through the piece of solid material as a function of at least one location of the defect(s) 510. In generating the cut path 520, the cut path 520 may be created from the piece of solid base material and located to exclude the defect(s) 510. More particularly, the cut path 520 may reflect the geometry and orientation of the defect(s) 510 relative to (I) the piece of base material 500; (ii) a location, orientation, and geometry of the piece of base material 500; and, (iii) the geometry of the part(s). As illustrated in FIGS. 4 and 5, in one embodiment, a cut path 520 generated in an area of the base material 500 containing a defect 510 may be shifted to another area of the base material free of defects 530 as shown by the dashed arrows. By doing so, the amount of base material free of defects 530 may be optimized to fabricate a larger quantity of parts from the base material 500. The quantity of parts identified in the base material facilitates reducing waste generated during fabrication of the parts. As the cut path 520 may comprise any number of parts, including different parts, the resultant multiple parts may include combinations of the aforementioned parts disclosed herein. In at least one embodiment, the cut path 520 may be located using the cut path generation module 170 of FIG. 1 when carrying out an exemplary step 430 of FIG. 3. The cut path generation module 170 may be an exemplary machine of a fabrication module 600 of FIG. 2 that is programmed with the cut path 520 to create the parts at an exemplary step 440 of FIG. 3 and operated to cut the parts out of the piece of solid base material at an exemplary step 450 of FIG. 3.

In at least one embodiment, the fabrication module 600 may fabricate the parts from the piece of solid base material 500 by executing the cut path 520 generated by the cut path generation module 700 (See FIGS. 4 and 5). The cut path 520 may be programmed into the controller 110 that is in electrical communication with the cut path generation module 700 and a machine of the fabrication module 600. The processor 180 may be electrical communication with the memory 160 that stores instructions and, in turn, sends those instructions to the processor 180. Those instructions, when executed, may cause the processor 180 to receive data indicative of a geometry and an orientation of the defect(s) 510 relative to the piece of solid base material 500; a location and an orientation of the piece of solid base material 500 relative to the fabrication module 600; and, a geometry of the parts. The processor 180 may further generate the cut path 520 based on the geometry and orientation of the defects 510, the location and orientation of the piece of solid base material 500, and the geometry of the parts. Executing the cut path may comprise, but is not limited to, cutting the piece of solid base material 500 along the cut path 520 at an exemplary step 450 of the exemplary flowchart 400 of FIG. 3 to fabricate parts. The machine of fabrication module 600 may be any machine operable to provide the functionality described herein. For example, it may be, or include, one or more of the following: a Computer Numerical Control (CNC) module; a laser cutter module; and, a water jet module. In at least one alternative embodiment, the cut path 520 may be created and located by an operator manually laying out at the shape(s) of the part(s) on a piece of solid base material 500 from which the part(s) is/are to be cut.

In at least one embodiment, the exemplary module may further comprise a fabricated part-inspection module 800 of FIG. 2. The fabricated part-inspection module 800 may perform a dimensional inspection of the parts after executing the cut path of exemplary step 450 of the exemplary flowchart 400 of FIG. 3. The dimensional inspection may confirm the exemplary module system excludes performing post-processing of the parts. As a result, when carrying out the exemplary method disclosed herein, the cut, fabricated part may exhibit and possess a near-net shape.

Using the exemplary method disclosed herein, the aforementioned gas turbine engine components and/or parts of different shape(s) and/or size(s) may be produced from a piece of solid base material. For instance, a cut path comprising both larger parts and smaller parts may locate the smaller parts in areas between the larger parts. The particular layout of parts on a single sheet or a single tubular shape of base material may be determined by the size(s) and/or shape(s) of the desired part, and location and/or size of the defective areas in the base material.

The resultant cut, fabricated near net shape part can be complete whole entire parts, e.g., an apex seal, a side plate, a feather seal, a platform gap seal, a sealing ring, a piston ring, a shroud segment, a combustion liner; or, one or more components of a more complex part to be fabricated in their entirety later. In the alternative, the aforementioned parts may exhibit and possess a size that fits within a box having inner dimensions of a width of approximately 100 thousandths of an inch; a width of approximately 200 thousandths of an inch; and, a length of approximately 1 inch.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A method of fabricating parts, comprising:
identifying a location of a defect (510) in a piece of solid base material (500);
generating a cut path (520) through the piece of solid base material (500) as a function of the location of the defect (510), wherein the cut path (520) is configured to create the parts from the piece of solid base material (500) when the cut path (520) is executed, and the function is configured to locate the cut path (520) through the piece of solid base material (500) such that all the parts, once cut out of the piece of solid base material (500), exclude the defect (510); and
fabricating the parts from the piece of solid base material (500) by executing the cut path (520), the executing including cutting the piece of solid base material (500) along the cut path (520).

2. The method of claim 1, wherein identifying the location of the defect (510) includes one or more of:
generating an x-ray image of the piece of solid base material (500);
performing a visual inspection of the piece of solid base material (500);
performing an ultrasound inspection of the piece of solid base material (500); and
performing a fluorescent penetrant inspection of the piece of solid base material (500).

3. The method of claim 1 or 2, wherein the function is configured to locate the cut path (520) through the piece of solid base material (500) to maximize an amount of the piece of solid base material (500) utilized during the fabricating the parts.

4. The method of claim 1, 2 or 3, wherein the method further includes:
programming the cut path (520) into a controller (110) of a machine operable to cut the parts out of the piece of solid base material (500); and
the executing the cut path (520) is performed by the machine being controlled by the controller (110).

5. The method of any preceding claim, wherein the defect (510) is a plurality of defects (530; 510).

6. The method of any preceding claim, wherein generating the cut path (520) defines a near-net shape of at least one part of the parts.

7. The method of any preceding claim, further comprising performing a dimensional inspection of the parts after the executing the cut path (520).

8. The method of any preceding claim, wherein the method excludes performing post-processing the parts after the executing the cut path (520).

9. The method of any preceding claim, wherein the piece of solid base material (500) is a ceramic matrix composite.

10. The method of any preceding claim, wherein the parts include one or more of:
an apex seal, a side plate, a feather seal, a platform gap seal, a sealing ring, a piston ring, a shroud segment, and a combustion liner.

11. The method of any preceding claim, wherein generating the cut path (520) includes defining the cut path (520) as a function of:
geometry and orientation of the defect (510) relative to the piece of solid base material (500),
a location, orientation, and geometry of the piece of solid base material (500), and
geometry of the parts.

12. A system for fabricating parts, comprising:
a material-inspection module (200) operable to identify locations of defects (510) in a piece of solid base material (500);
a fabrication module (600) operable to execute a cut path (520) through the piece of solid base material (500) to fabricate the parts; and
a cut path generation module (170; 700) operable to receive the locations of the defects (510) from the material-inspection module (200) and to generate the cut path (520) through the piece of solid base material (500) based on the locations of the defects (510) such that, the cut path (520), when executed by the fabrication module (600), excludes each defect (510) of the defects (510) from each part of the parts.

13. The system of claim 12, wherein the cut path generation module (170; 700) is operable to generate the cut path (520) through the piece of solid base material (500) to maximize the number of the parts that can be made from the piece of solid base material (500).

14. The system of claim 12 or 13, wherein the fabrication module (600) is operable to cut a ceramic matrix composite (CMC) material (500).

15. The system of claim 12, 13 or 14, wherein the cut path generation module (170; 700) includes a processor (180) in communication with a non-transitory memory (160) storing instructions that, when executed by the processor (180), cause the processor (180) to:
receive data indicative of:
geometry and orientation of the defects (530; 510) relative to the piece of solid base material (500);
a location and orientation of the piece of solid base material (500) relative to the fabrication module (600); and
geometry of the parts; and
generate the cut path (520) based on the geometry and orientation of the defects (530; 510), the location and orientation of the piece of solid base material (500), and the geometry of the parts.
